Europäisches Patentamt

European Patent Office

Office européen des brevets

(11) Publication number: **0 248 933 B1**

(12) **EUROPEAN PATENT SPECIFICATION**

(45) Date of publication of patent specification: **19.02.92**   (51) Int. Cl.⁵: **B65H 5/10**, B65G 57/00, B65G 57/24

(21) Application number: **86107937.4**

(22) Date of filing: **10.06.86**

(54) **Sheet transfer device and method.**

(43) Date of publication of application:
**16.12.87 Bulletin 87/51**

(45) Publication of the grant of the patent:
**19.02.92 Bulletin 92/08**

(84) Designated Contracting States:
**AT BE CH DE FR GB IT LI LU NL SE**

(56) References cited:
**DE-C- 1 907 763**
**DE-C- 2 410 301**
**DE-U- 8 305 493**
**US-A- 3 897 877**

(73) Proprietor: **GOLDCO INDUSTRIES, INC.**
**15097 West 44th**
**Golden Colorado 80401(US)**

(72) Inventor: **Vander Meer, Richard H.**
**14178 West 58th Place**
**Arvada Colorado 80004(US)**
Inventor: **Pearce, Ronald A.**
**2997 Pierson Way**
**Lakewood Colorado 80215(US)**
Inventor: **Kapke, Milton W.**
**406 North Ford**
**Golden Colorado 80403(US)**

(74) Representative: **Baillie, Iain Cameron et al**
**c/o Ladas & Parry, Altheimer Eck 2**
**W-8000 München 2(DE)**

# Description

## Field of the Invention

This invention relates to a sheet transfer device and method, and, more particularly, relates to a device and method for transferring sheets from a stack of sheets to a utilization area such as a can pallet.

## Background of the Invention

Devices and methods have been heretofore suggested for moving, or transferring, various objects from one location to another (see German Patent No. 2410301), and such devices have included means for transferring relatively large sheets from place to place (see German Patent No. 1907763). In addition, devices are now known for applying suction to enable pick-up of objects.

It is also known that sheets of paper, paper board, plastic and the like, can be placed between vertical layers of a stack of articles, such as cans, with such placement being accomplished manually or by a transfer device. Such devices have, however, been relatively cumbersome to date, have required that the sheets be moved by overhead devices, have been limited in use doe to the amount of space required for sheet transfer and/or have required excessive use of critical space.

DE-C-1 907 763 discloses a sheet transfer device according to the pre-characterising part of claim 1. This device requires a relatively tall vertical column to enable the pivot point of the arm to move vertically. Without such movement, the device would not and could not, provide the needed motion (i.e., vertically up and then across an area and then vertically down) of the transfer sheet. Tall vertical columns are a problem in some installations, yet the needed motion of the transfer sheet must still be provided.

It is therefore an object of this invention to provide an improved device and method for transferring sheets that is particularly useful for transferring sheets from a sheet stack to a utilization device, such as a can pallet, that is relatively compact and withdraws and deposits sheets in a direction having a vertical component to thus require a minimum amount of critical space for sheet transfer.

It is another object of this invention to provide an improved device and method for sheet transfer from a sheet stack to a utilization area, such as a can pallet.

It is still another object of this invention to provide an improved device and method for sheet transfer of each sheet from the top of a stack of sheets by application of suction for sheet pick-up and terminating suction application after deposit of the sheet on the top cans on a pallet.

It is still another object of this invention to provide an improved device for sheet transfer that is relatively compact and requires a minimum of space for sheet transfer.

It is yet another object of this invention to provide an improved device and method for sheet transfer that lifts each sheet upwardly and deposits each sheet downwardly to minimize critical space requirements for sheet transfer.

It is still another object of this invention to provide an improved device for sheet transfer that is automatic in operation.

These objects are attained by the device according to claim 1 and by the method according to claim 13.

## Description of the Drawings

The accompanying drawings illustrate a complete embodiment of the invention according to the best mode so far devised for the practical application of the principles thereof, and in which:

FIGURE 1 is a perspective view of the sheet transfer apparatus of this invention shown in connection with transferring sheets from a sheet stack to a pallet receiving vertical layers of stacked cans and having a sheet placed between each of said layers;

FIGURE 2 is a top view of the sheet transfer apparatus of this invention, as shown in FIGURE 1, illustrating positioning of the apparatus to pick up a sheet and deposit said sheet onto the top of a layer of cans;

FIGURE 3 is a front sectional view taken through lines 3-3 of FIGURE 2;

FIGURE 4 is a side sectional view taken through lines 4-4 of FIGURE 3;

FIGURE 5 is a front sectional view taken through lines 5-5 of FIGURE 1;

FIGURE 6 is a side sectional view taken through lines 6-6 of FIGURE 5;

FIGURE 7 is a side sectional view taken through lines 7-7 of FIGURE 5;

FIGURE 8 is a side sectional view taken through lines 8-8 of FIGURE 5;

FIGURE 9 is a front sectional view taken through lines 9-9 of FIGURE 2;

FIGURES 10A and 10B are front views of the mating surfaces of the rotary valve controlling suction and air delivery for sheet pickup and release; and

FIGURES 11 through 14 are partial front views of the device shown in FIGURE 1 and illustrating operation of the device during transfer of sheets from a sheet stack to a can pallet.

Description of the Invention

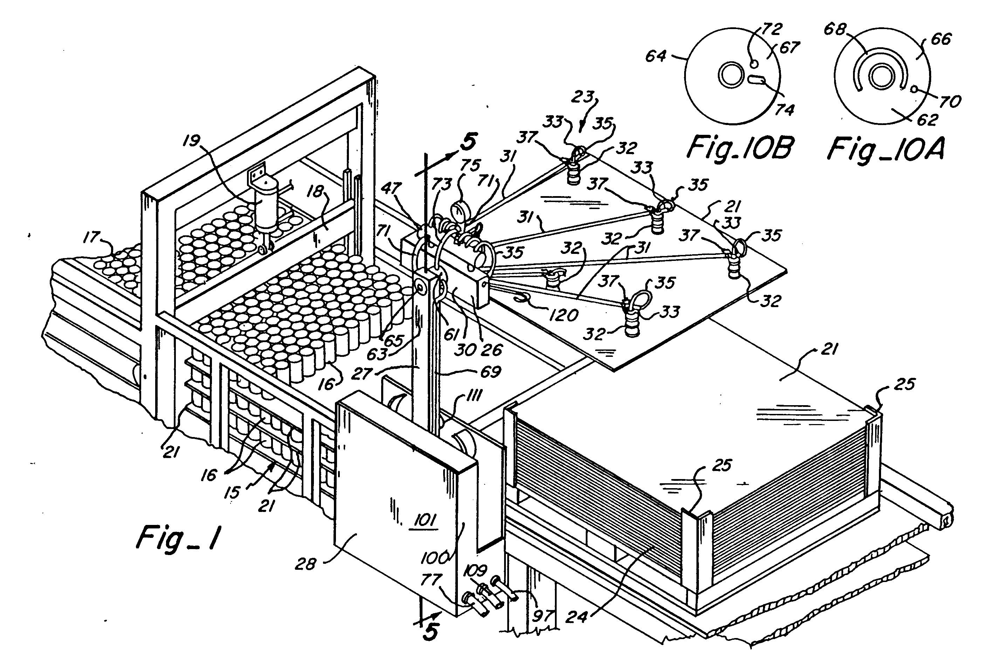

As shown in the perspective view of FIGURE 1, a conventional can pallet 15 normally receives a plurality of cans 16 from an accumulating table 17 when can block arm 18 is drawn upwardly to a non-blocking position by cylinder/piston unit 19 to allow cans to thereafter be deposited side by side on the pallet with the cans tightly packed and engaging one another. As is well known, such can pallets normally include a plurality of vertically stacked layers in which the cans are positioned end to end, as is indicated in FIGURE 1. When packed on the pallet, it is also conventional to place a thin sheet 21 (of paper, paper board, plastic or other suitable materials) between each vertically stacked layer of cans.

The sheet transfer device 23 of this invention transfers sheets from a first position to a second position, and, in particular, is well suited to transfer a sheet 21 from the top of sheet stack 24 (which sheets are maintained in a uniform stack, which may be accomplished, for example, by providing corner sheet positioners 25, as indicated in FIGURE 1) to the top of each vertical layer of cans 16 (i.e., with the sheet in engagement with the upwardly extending ends of the cans, as shown in FIGURE 1) on pallet 15 before the next layer of cans is deposited on the pallet.

As indicated in FIGURE 1, transfer of sheets from the top of a sheet stack 24 to the top of cans on pallet 15 is complicated because of the changing heights between the top of the sheet stack and the tops of the cans on the pallet due to depletion of the sheets on the stack. While not specifically shown, it is also to be appreciated that the sheet transfer device could be used for other applications such as, for example, transferring of sheets from the top of a layer of cans to an accumulating area.

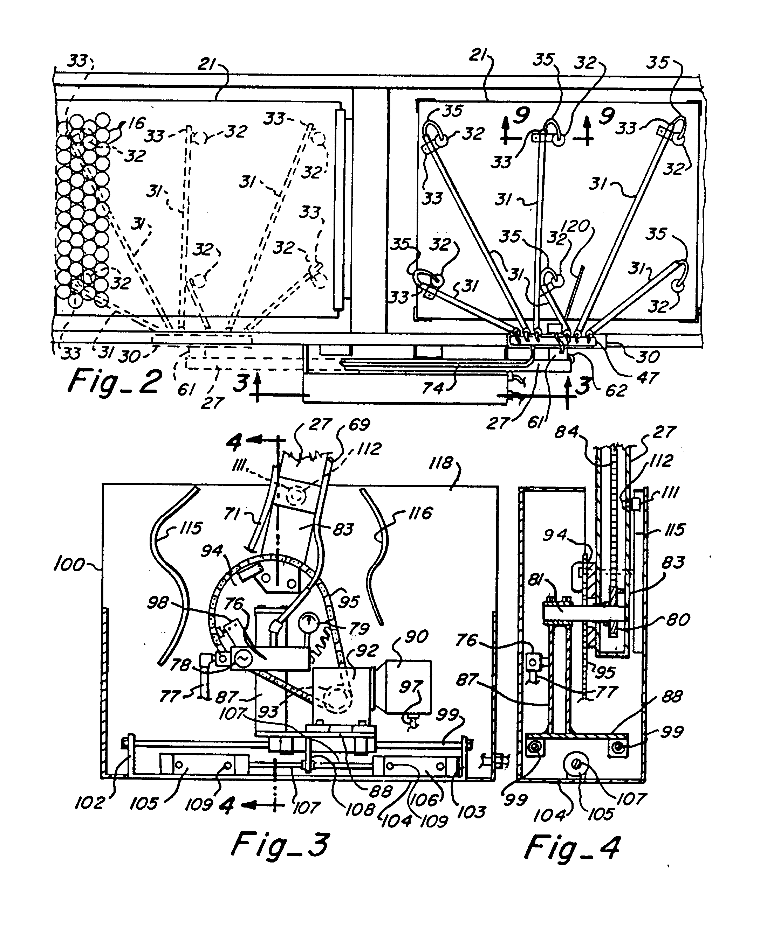

As best shown by the overall perspective view of FIGURE 1, sheet transfer device 23 includes a sheet engaging mechanism 26 pivotally mounted at one end of transfer beam 27. The other end of beam 27 is mounted for pivotal movement at movable drive unit 28, the details of which are best shown in FIGURES 3 and 4. Sheet transfer device 23 is mounted at one side of the path of travel of a sheet during sheet transfer with the drive unit thus being at one side and below at least a portion of the transfer path. The sheet transfer device can therefore be independently mounted, such as on a can handling mechanism.

Sheet engaging mechanism 26 includes, as best shown in FIGURES 1, 2 and 7, horizontally extending U-shaped support 30 having a plurality of arms 31 extending outwardly and somewhat downwardly therefrom with each of arms 31 having a downwardly facing suction element, or cup, 32 at, or near the free end 33 thereof. As brought out more fully hereinafter, support 30 is maintained in a horizontal position during the entire travel of beam 27 to effect sheet transfer.

Arms 31 are preferably of various lengths, as indicated in FIGURES 1 and 2, and suction elements 32 are positioned, as desired, at or near the free end 33 (i.e., at the end or inwardly thereof), so that suction elements 32 are bought into engagement with the top of a sheet at spaced positions with respect thereto. Such engagement is, however, preferably near each corner and near the edges of the central portion, as shown best in FIGURE 2, and six arms and suction cups are thus illustrated, although the invention is not meant to be limited thereto.

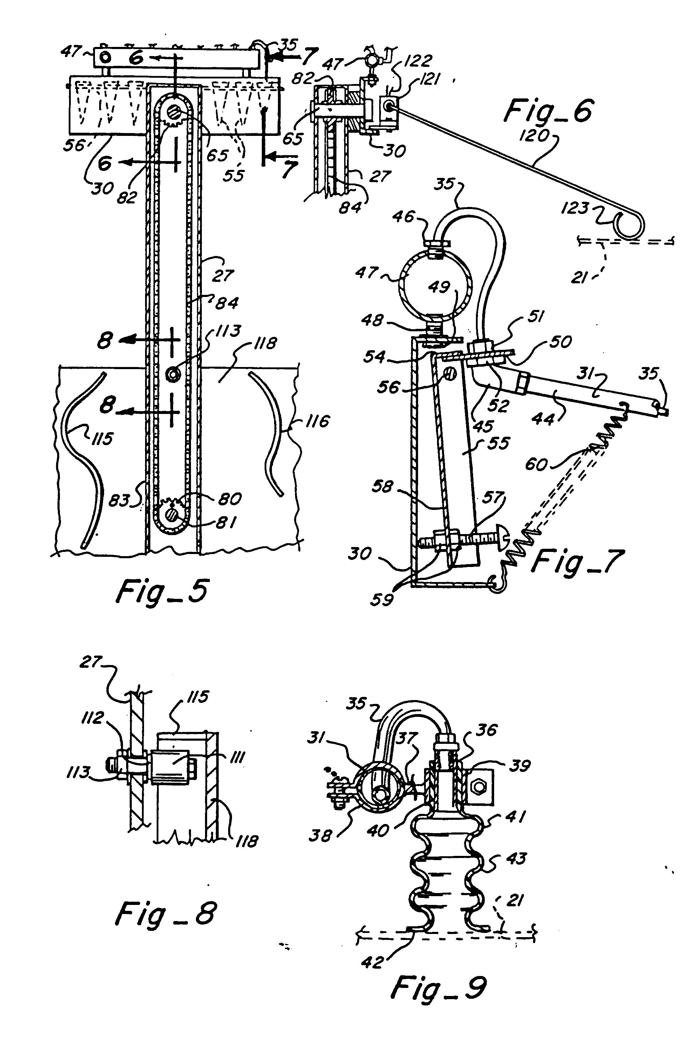

Each arm 31 is formed of relatively rigid tubular material, preferably metal, and has a second tube 35 extending therethrough. One end of tube 35 extends from the free end 33 of the arms to the top of coupling 36 (see FIGURE 9). Coupling 36 is mounted on or near the end 33 of arm 31 by means of bracket 37, which bracket has a tubing clamp 38 encircling arm 31 and a cup clamp 39 at coupling 36 so that one end 40 of suction cup, or element, 41 is clamped in sealing engagement around coupling 36 (as indicated in FIGURE 9). Suction cup 41 is made of readily flexible material, such as rubber, for example, has an outwardly flaring lip 42 at the lower end for engaging the sheet, with an accordion-like central body portion 43 to allow the cup to be readily compressed, as needed, for good engagement with the top of a sheet.

As best shown in FIGURE 7, end 44 of each arm 31 has a hollow elbow 45 thereon. Elbow 45 has tube 35 extending therethrough to coupling 46 at manifold 47, which manifold is secured at the top of support 30 by mounting stud 48 having nut 49 threaded thereon. In addition, elbow 45, preferably formed of a metal, is threaded and receives tab 50 thereat between nut 51 and washer 52. Tab 50 is secured (as by welding, for example) to the top end 54 of bracket 55, which bracket is mounted for pivotal movement with respect to support 30 by means of horizontally extending rod 56.

An adjustable, threaded, stop bolt 57, engageable at one end with support 30, is fastened to the narrowing bottom end 58 of bracket 55 by means of nuts 59 at the opposite sides of bracket 55 so as to establish the maximum point of pivot of bracket 55 about rod 56 in the direction of downward movement of free end 33 of arm 31 toward a sheet and hence establishes the normal positioning of the arm with respect to support 30. Downward bias is applied to arm 30 by means of spring 60 which extends from arm 31 to the bottom of U-shaped support 30.

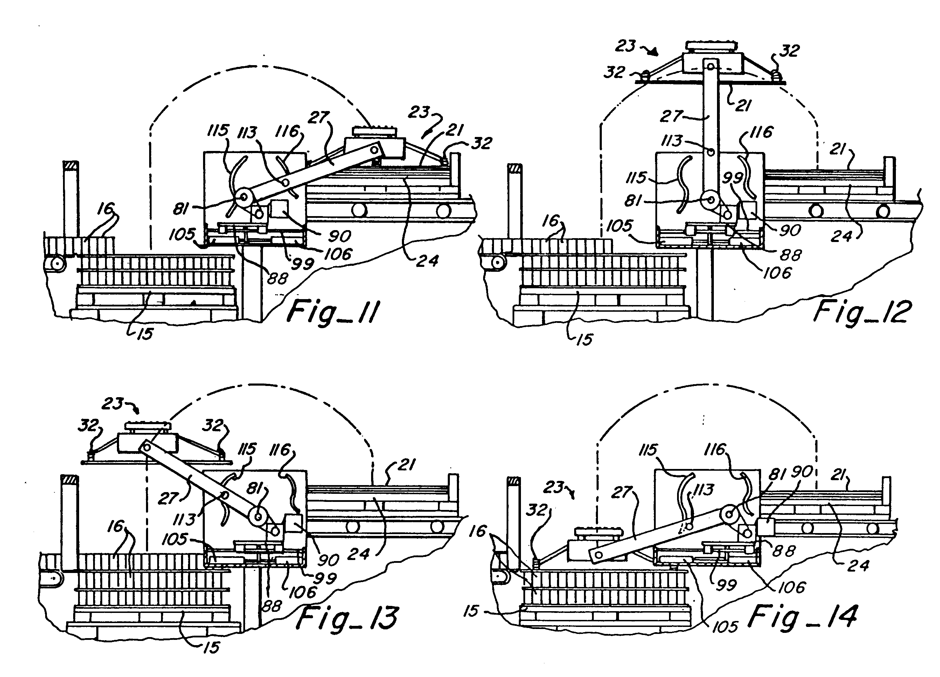

As best shown in FIGURES 1 and 10, upper rotary valve 61 is mounted on support 30 with rear portion 62 fixed to the upper end 63 of beam 27 and forward portion 64 mounted on pivot pin 65 so that forward portion 64 of rotary valve 61 pivots relative to rear portion 62. As indicated in FIGURES 10A and 10B, rear portion 62 of rotary valve 61 has face 66 which mates with face 67 of forward portion 64 for controlling application of a partial vacuum (or suction force) and air through manifold 47 and tubing 35 to cups 32, as needed, to pick up and release a sheet from the sheet stack.

As shown in FIGURE 10A, face 66 has an arcuate slot 68 therein communicating with suction force supply line 69 (which line is mounted on the rear portion 62 of the rotary valve). In addition, face 66 has an aperture 70 located radially outwardly of slot 68 communicating with an air pressure supply line 71 (which line is also mounted on rear portion 62 of the rotary valve but maintained out of communication with the suction force supplied through line 69). As shown in FIGURE 10B, face 67 has an aperture 72 thereon communicating with manifold 47 through tube 73 (which tube is mounted on formed portion 64 of the rotary valve), and a slot 74 spaced from aperture 72. As shown in FIGURE 1, tube 73 may have a pressure indicator 73 connected therewith.

Aperture 72, when in communication with arcuate slot 68, supplies suction force to cups 32, except that when exhaust coupling slot 74 is brought into communication with slot 68 (as the faces pivot relative to one another as beam 27 is pivoted to transfer a sheet), the suction force to cups 32 is terminated and air pressure is introduced through line 71 to cups 32 (or, alternately, aperture 70 can merely exhaust the suction pressure).

Suction supply line 69 is connected with vacuum pump 76, which pump may be a conventional pump for receiving air pressure from a conventional source through line 77 and supply negative pressure (or suction force) with such pressures being indicated, for example, by indicators 78 and 79. Such a pump may be, for example, a PIAB Vacuum Pump sold by PIAB USA, Inc. of Hingham, Massachusetts. Air pressure (or positive pressure ) line 71 is connected to the positive air pressure side of pump 76 (or, alternately, directly to the incoming pressure source).

Transfer beam 27 has a lower sprocket 80 that is fixed relative to ground, with sprocket 80 being mounted on pivot pin 81. Beam 27 has an upper driven sprocket 82 mounted thereon with sprocket 82 having a planetary motion relative to pivot pin 81 as the lower portion 83 of beam 27 is pivoted about pin 81. Sprocket 82 is mounted on pivot pin 65 with the sprockets having an endless chain 84 extending therebetween, as shown in FIGURE 5.

As indicated in FIGURE 4, pivot pin 81 is mounted on upright 87 of moveable base, or platform, 88 having drive unit 28 mounted thereon. As indicated in FIGURES 3 and 4, vacuum pump 76 is also mounted on upright 87 with compressed air being supplied to pump 76 through tube 77 leading to an external source.

Pivoting of beam 27 is controlled by motor 90 of drive unit 28 mounted on and connected with gear box 92, which gear box is mounted on platform 88. Drive gear 93, at gear box 92, is connected to driven gear 94, mounted on pin 81, through endless chain 95. Sprocket 80 is freely mounted on pin 81 so that, when pin 81 rotates sprocket 80 is held fixed (i.e., does not rotate). Thus, as beam 27 is pivoted, chain 84 and sprockets 80 and 82 maintain support 30 horizontal regardless of beam orientation during sheet transfer. Power for electric motor 90 is provided through electrical conduit 97, and a cam 98 is provided on gear 94 to cause switch actuation (not shown) to reverse the motor drive to thereafter cause pivoting of beam 27 in the clockwise direction.

Platform 88 is moveable along guide rods 99 (within and extending toward side walls 100 of cover box 101) held by mounts 102 and 103 which extend upwardly from the bottom 104 of the device. When so mounted, platform 88 is moveable in reciprocal directions in a straight path in (or parallel to) the plane of movement of beam 27 (i.e., toward and between sheet stack 24 and can pallet 15).

A pair of pneumatic cylinders 105 and 106 are positioned along base 104 and each has a piston rod 107 extending therefrom with the end of each rod engaging depending tab 108, connected with platform 88, at opposite sides of the tab to thus push thereagainst. Cylinders 105 and 106 are connected with an external air source through tube 109 so that the cylinder/piston arrangement act as air springs (i.e., biases rod 107 to the outmost position with respect to the cylinder) to maintain platform 88 centrally positioned except when displaced by cam actuation as brought out hereinafter.

Cam follower 111 is mounted for free rotation on pin 112, which pin is secured to beam 27, above lower pivot 81 by means of nut 113, as indicated in FIGURE 8.

Cam follower 111 is engageable with cam guides, or surfaces, 115 and 116 on back support wall 118. As best shown in FIGURES 3 and 5, cam guides 115 and 116 are contoured in a manner such that, as beam 27 is pivoted, from a first position where the sheet engaging means is adjacent to the sheet stack, to a second position, where the sheet engagement means is adjacent to the pallet, platform 88 is displaced by the cam guides to assure that a sheet picked up from the sheet stack is moved upwardly from the stack and is lowered downwardly toward the pallet.

The camming arrangement thus adjusts the effective length of the beam to enable the required movement upwardly and downwardly. As can be appreciated, the cam surfaces 115 and 116 are contoured as needed to effect the desired upward and downward movement of the sheet, with such movement including a vertical component. If desired, of course, the upward and downward movement could be in vertical directions. It should also be appreciated that other means could be utilized to adjust the effective length of beam 27, such as, for example, by providing a telescoping arm and controlling the amount of telescoping as needed.

As best shown in FIGURE 6, sensor rod 120 extends outwardly and downwardly from switch 121 mounted on support 30. Switch 121 is connected by leads 122 to motor 90 to cause drive reversal of the electric motor when end 123 of sensor 120 comes into contact with sheet 21 on sheet stack 24.

Operation of the device of this invention is shown in connection with FIGURES 11 through 14. As indicated in FIGURE 11, when sheet engaging mechanism 23 is positioned adjacent to sheet stack 24, the suction force supplied to suction cups 32 causes the top sheet 21 to be lifted from the sheet stack. At this time, beam 27 has been pivoted clockwise (as viewed in FIGURE 11) and cam follower 111 is in engagement with cam guide 116 to force lower beam pivot 81 to the maximum left position by moving platform 88 to the left along guide rods 99 (as viewed in FIGURE 11).

As beam 27 is moved in a counterclockwise direction upwardly away from sheet stack 24, a short delay is preferably introduced to allow a sheet below top sheet 21 in stack 24 to settle and thus break the natural vacuum between the sheets. This assures that only a single sheet is transferred. During movement of the beam in the counterclockwise direction away from the sheet stack, the camming arrangement (cam follower 111 and cam guide 116) moves platform 86, as needed, so that upward movement of the sheet has a vertical component until the end of engagement of cam follower 111 with cam surface 116.

After the beam has been sufficiently pivoted in the counterclockwise direction so that cam follower 111 no longer engages cam surface 116, cylinder 105 drives the platform to the center portion so that pivot 81 is centrally positioned during the midportion of travel of beam 27 (which beam is shown vertically positioned in FIGURE 12).

As the beam is moved still further in the counterclockwise direction (i.e., toward the can pallet), cam follower 111 is brought into engagement with cam guide 115 to assure lowering of the sheet downwardly toward the can pallet by displacing the platform to the right (as viewed in FIGURE 13), and thus moving the pivot point 81 of the beam to the right (as also indicated in FIGURE 13).

When the beam has been pivoted sufficiently in the counterclockwise direction so as to be adjacent to the top layer of cans on the can pallet, cam follower 111 is still engaged with cam guide 115 to assure that the sheet is accurately deposited on the upwardly facing ends of the top layer of cans 16 on pallet 15, as indicated in FIGURE 14. At this point, the suction on cups 32 is terminated by the rotation of face 62 relative to face 64 of rotary valve 61, and this releases sheet 21 from the sheet engaging mechanism 23. As indicated by FIGURE 10, a slight puff of air is preferably introduced to the cups 32 at termination of the suction force to further assure sheet release.

After release of the sheet, the direction of drive of motor 90 is reversed by cam 98 on gear 94 to drive the transfer beam in a clockwise direction back to a position adjacent to the top of sheet 21 of sheet stack 24. As sensor 120 engages sheet 21, switch 121 is actuated to again reverse the direction of drive of motor 90 and thus stop the clockwise pivoting motion of beam 27. The device is then ready to initiate the next cycle.

The timing of sheet transfer is coordinated with the speed that cans are conveyed to the can pallet and deposited thereon so that a sheet is applied to the pallet after the horizontal layer is filled with cans positioned side by side and the pallet lowered (which lowering can be sensed (as by an electrical switch (not shown)) and a signal sent to the sheet engaging mechanism to start a new cycle).

As can be appreciated from the foregoing, this invention provides an improved device and method for transferring sheets from one position to another, and, more particularly from a stack of sheets to a utilization area, such as a can pallet.

## Claims

1. A sheet transfer device for transferring a sheet from a first predetermined position (24) to a second predetermined position (16) that is spaced with respect to said first predetermined position, said device including sheet engaging means (26) connected with a movable beam (27) for engaging a sheet at said first predetermined position and thereafter releasably maintaining said sheet in engagement with said sheet engaging means, said device including transferring means having a base portion (88), said base portion including movable pivot means (81) having said movable beam pivotably mounted thereon at a position spaced from said sheet engaging means, said moveable beam being connected with said sheet engaging means to cause said sheet engaging means to be moved from said first predetermined position to said second predetermined position while enabling such movement to include substantially linear movement of said connection between said movable beam and said sheet engaging means in a substantially vertical direction away from said first predetermined position for a substantial distance during a first portion of said movement, movement of said connection between said movable beam and said sheet engaging means having a horizontal component during a second portion of said movement, and substantially linear movement of said connection between said movable beam and said sheet engaging means in a substantially vertical direction toward said second predetermined position for a substantial distance during a third portion of said movement, said moveable beam of said transferring means moving in a substantially vertical plane during said movement of said sheet engaging means from said first predetermined position to said second predetermined position, said device having releasing means (61) for causing said sheet to be released from said sheet engaging means when said sheet has been moved by said sheet engaging means to said second predetermined position, said device being characterized by:

said transferring means having control means (111, 115, 116) acting in conjunction with said movable beam, with said movable pivot means being substantially immovable in a vertical direction, to determine the effective length of said movable beam.

2. The device of claim 1 further characterized by said sheet engaging means including an elongated support (30), a plurality of arms (31) extending from said support with said arms being mounted for pivotal movement in a substantially vertical path so that said arms can be readily deflected when an obstacle is encountered, and a plurality of sheet engagers (32) connected with said arms for engaging said sheet at a plurality of spaced points thereon.

3. The device of claim 2 further characterized by said transferring means including means (80, 82, 84) for maintaining said elongated support in a substantially horizontal position regardless of the orientation of said movable beam of said transferring means.

4. The device of claim 2 further characterized by said sheet engagers including suction effecting means (32), wherein said device includes suction force supply means (76) including valving means (61) and distribution means (47) for supplying suction force to said suction effecting means through said valving means, and wherein said valving means causes said suction force to be applied to said suction effecting means when said suction effecting means is in contact with said sheet at said first predetermined position to thereafter releasably maintain said sheet in engagement with said sheet engaging means and for causing said sheet to be released from said sheet engaging means when said sheet has been moved by said sheet engaging means to said second predetermined position.

5. The device of claim 4 further characterized by each of said suction effecting means having an application area (42), and each of said suction effecting means being mounted on said arms to maintain a substantially constant directional orientation of said application areas throughout said movement of said transferring means.

6. The device of claim 4 wherein said suction effecting means are suction cups.

7. The device of claim 1 further characterized by said base portion being movably mounted on support means (99) so that said base portion is movable in opposite directions in a path toward and away from said first and second predetermined positions.

8. The device of claim 7 further characterized by said control means including cam means (111) connected with said movable beam to cause displacement of said pivot means to thereby determined the effective length of said movable beam.

9. The device of claim 8 further characterized by said control means including biasing means (105, 106) for biasing sai dpivot means to a predetermined central position when not displaced by said cam means.

10. The device of claim 1 further characterized by said device including means (99, 104) having said base portion of said transferring means mounted thereon so that said movable beam can pivot in a predetermined plane.

11. The device of claim 1 wherein said first predetermined position of said sheet is adjacent to the top of a stack of sheets (24), wherein said second predetermined position is adjacent to the top of a can pallet (15), wherein said sheet engaging means engages the top sheet of said sheet stack as said sheet to be transferred, and wherein said transferring means moves said top sheet from said sheet stack to the top of cans on said can pallet.

12. The sheet transfer device of claim 1 wherein said first predetermined position is a sheet stack (24), wherein said second predetermined position is the tops of a layer of cans (16) on a can pallet (15), wherein said sheet engaging means (26) is connected with one end portion of said movable beam (27), said device being further characterized by:

said sheet engaging means having an elongated support (30), a plurality of arms (31) extending from said support, a plurality of suction cups (32) each of which is mounted on a different one of said arms to contact said sheets at predetermined spaced points, a manifold (47) mounted on said support, and first tube means (35) connected between said manifold and said suction cups;

suction force supply means (76);

valving means (61);

second tube means (69, 73) connecting said suction force supply means to said manifold means through said valving means;

said base portion including platform means (88) having said pivot means (81) thereat for mounting the other end of said movable beam on said platform means so that said beam can pivot in a path such that said sheet engaging means is positionable over said sheet stack and said can pallet at opposite maximum pivoting positions of said movable beam;

said base portion including support means (99) having said platform means movably mounted thereon so that said platform means is moveable in opposite directions in a path toward and away from said sheet stack and said can pallet;

said control means including camming means (111, 115, 116) having a cam follower (111) mounted on said movable beam and cam guides (115, 116) mounted on said support means for engaging said cam follower during at least a portion of said pivotal movement of said movable beam, said cam guides being contoured so that when said cam follower is in engagement with said cam guides said platform means is displaced due to pivoting of said movable beam to thereby control the effective length of said movable beam and thereby cause predetermined movement of said sheet away from said sheet stack and toward said can pallet;

biasing means (105, 106) connected with said platform means to cause movement of said pivot means to a predetermined central position when said cam follower is out of engagement with said cam guides; and

drive means (28) for causing pivoting of said movable beam to thereby transfer said sheet from said sheet stack to said can pallet.

13. A method for transferring a sheet from a first predetermined position to a second predetermined position using a transferring means, said method including the steps of gripping a sheet to be transferred from said first predetermined position to said second predetermined position by movement of an arm pivotably connected to a base by movable pivot means, said transferring means pivoting said arm about said movable pivot means to cause movement of said sheet substantially linearly in a substantially vertical direction upwardly from said first predetermined position for a substantial distance, pivoting said arm about said movable pivot means to move said sheet through a substantially vertically oriented arc after completing said upward movement to a point over said second predetermined position, pivoting said arm about said movable pivot means to cause movement of said sheet substantially linearly in a substantially vertical direction downwardly a substantial distance after said sheet has been moved through said arc to deposit said sheet at said second predetermined position, and releasing said sheet after deposit at said second predetermined position, said method characterized by,

said arm having a variable effective length during said pivoting steps and said pivotable connection between said arm and said base being substantially immovable in a vertical direction during said pivoting steps.

14. The method of claim 13 wherein said method includes gripping said sheet by utilizing a plurality of suction cups and applying a suction force within said cups, and wherein said releasing of said sheet includes terminating said suction force and applying air pressure to said cups.

15. The method of claim 14 wherein said suction cups are mounted at the end of portions of tubes mounted on the other end of said arm, with each of said cups having an open end and with said open ends being maintained in a substantially constant directional orientation throughout said pivoting movements of said other end of said arm, and wherein said pivot means is displaceable to cause said arm to move said sheets in said substantially vertical directions.

16. The method of claim 15 wherein said pivot means is displaced by providing camming means, and wherein said pivot means is biased to a predetermined central position when not displaced by said camming means.

17. The method of claim 13 wherein said method includes causing each of said steps to be automatically repeated in conjunction with deposit of a layer of cans on said can pallet whereby said pallet is automatically filled with vertical layers of upright cans with each of said vertical layers having a sheet therebetween.

**Revendications**

1. Dispositif de transfert de feuilles pour transférer une feuille d'une première position prédéterminée (24) dans une seconde position prédéterminée (16) qui est distante de ladite première position prédéterminée, ledit dispositif comprenant un moyen de contact avec une feuille (26) reliée à une poutre mobile (27) pour venir en contact avec une feuille dans ladite première position prédéterminée puis pour maintenir de manière détachable ladite feuille en contact avec ledit moyen de contact avec une feuille, ledit dispositif comprenant un moyen de transfert comportant une partie formant embase (88), ladite partie formant embase comprenant un pivot mobile (81) sur lequel est montée à pivotement ladite poutre mobile en une position distante dudit moyen de contact avec une feuille, ladite poutre mobile étant reliée audit moyen de contact avec une feuille pour amener ledit moyen de contact avec une feuille à se déplacer de ladite première position prédéterminée dans ladite seconde position prédéterminée en permettant audit mouvement de comporter un mouvement sensiblement linéaire de ladite liaison entre ladite poutre mobile et ledit moyen de contact avec une feuille dans une direction sensiblement verticale en s'écartant de ladite première position prédéterminée sur une distance sensible pendant une première partie dudit mouvement, le mouvement de ladite liaison entre ladite poutre mobile et ledit moyen de contact avec une feuille comportant une composante horizontale pendant une seconde partie dudit mouvement, et un mouvement sensiblement linéaire de ladite liaison entre ladite poutre mobile et ledit moyen de contact avec une feuille dans une direction sensiblement verticale vers ladite seconde position prédéterminée sur une distance sensible pendant une troisième partie dudit mouvement, ladite poutre mobile dudit moyen de transfert se déplaçant dans un plan sensiblement vertical pendant ledit mouvement dudit moyen de contact avec une feuille de ladite première position prédéterminée dans ladite seconde position prédéterminée, ledit dispositif comportant un moyen de libération (61) pour libérer ladite feuille dudit moyen de contact avec une feuille lorsque ladite feuille a été déplacée par ledit moyen de contact avec une feuille jusque dans ladite seconde position prédéterminée, ledit dispositif étant caractérisé en ce que :

ledit moyen de transfert comprend des moyens de commande (111, 115, 116) agissant en combinaison avec ladite poutre mobile, ledit moyen formant pivot étant sensiblement immobile dans une direction verticale, pour déterminer la longueur efficace de ladite poutre mobile.

2. Dispositif selon la revendication 1, caractérisé en outre en ce que ledit moyen de contact avec une feuille comprend un support allongé (30), une pluralité de bras (31) qui s'étendent depuis ledit support, lesdits bras étant montés en vue d'un mouvement de pivotement dans une trajectoire sensiblement verticale de sorte que lesdits bras peuvent s'écarter facilement lorsqu'ils rencontrent un obstacle, et une pluralité d'éléments de contact avec une feuille (32) reliés auxdits bras pour venir en contact avec ladite feuille en une pluralité de points distants sur celle-ci.

3. Dispositif selon la revendication 2, caractérisé en outre en ce que ledit moyen de transfert comprend des moyens (80, 82, 84) pour maintenir ledit support allongé dans une position sensiblement horizontale quelle que soit l'orientation de ladite poutre mobile dudit moyen de transfert.

4. Dispositif selon la revendication 2, caractérisé en outre en ce que lesdits éléments de contact avec une feuille comprennent des moyens réalisant une aspiration (32), ledit dispositif comprend un moyen de fourniture d'une force d'aspiration (76) comprenant une vanne (61) et un moyen de distribution (47) pour fournir la force d'aspiration auxdits moyens réalisant l'aspiration par l'intermédiaire de ladite vanne, et dans lequel ladite vanne provoque l'application de ladite force d'aspiration auxdits moyens réalisant l'aspiration lorsque lesdits moyens réalisant l'aspiration sont en contact avec ladite feuille dans ladite première position prédéterminée pour ensuite maintenir de manière détachable ladite feuille en contact avec ledit moyen de contact avec une feuille et pour amener ladite feuille à être détachée dudit moyen de contact avec une feuille lorsque ladite feuille a été amenée par ledit moyen de contact avec une feuille dans ladite seconde position prédéterminée.

5. Dispositif selon la revendication 4, caractérisé en outre en ce que chacun desdits moyens réalisant une aspiration comporte une zone d'application (42), et chacun desdits moyens réalisant une aspiration est monté sur lesdits bras pour maintenir une orientation sensiblement constante desdites zones d'application pendant ledit mouvement dudit moyen de transfert.

6. Dispositif selon la revendication 4, dans lequel lesdits moyens réalisant une aspiration sont des ventouses.

7. Dispositif selon la revendication 1, caractérisé en outre en ce que ladite partie formant embase est montée de manière mobile sur un moyen formant support (99) de sorte que ladite partie formant embase est mobile dans des sens opposés sur une trajectoire dirigée vers lesdites première et seconde positions prédéterminées et s'éloignant de ces dites positions.

8. Dispositif selon la revendication 7, caractérisé en outre en ce que ledit moyen de commande comprend un moyen formant came (111) relié à ladite poutre mobile pour provoquer le déplacement dudit pivot pour déterminer ainsi la longueur efficace de ladite poutre mobile.

9. Dispositif selon la revendication 8, caractérisé en outre en ce que ledit moyen de commande comprend un moyen de déplacement (105, 106) pour déplacer ledit pivot dans une position centrale prédéterminée lorsqu'il n'est pas déplacé par ledit moyen formant came.

10. Dispositif selon la revendication 1, caractérisé en outre en ce que ledit dispositif comprend des moyens (99, 104) sur lesquels est montée ladite partie formant embase dudit moyen de transfert de sorte que ladite poutre mobile peut pivoter dans un plan prédétermine.

11. Dispositif selon la revendication 1, dans lequel ladite première position prédéterminée de ladite feuille est adjacente au sommet d'une pile de feuilles (24), ladite seconde position prédéterminée est adjacente au sommet d'une palette de boîtes métalliques (15), ledit moyen de contact avec une feuille vient en contact avec la feuille supérieure de ladite pile de feuilles lorsque ladite feuille doit être transférée, et ledit moyen de transfert déplace ladite feuille supérieure de ladite pile de feuilles jusqu'au sommet des boîtes sur ladite palette de boîtes métalliques.

12. Dispositif de transfert de feuilles selon la revendication 1, dans lequel ladite première position prédéterminée est une pile de feuilles (24), ladite seconde position prédéterminée est le sommet d'une couche de boîtes métalliques (16) sur une palette de boîtes métalliques (15), ledit moyen de contact avec une feuille (26) est relié à une position extrême de ladite poutre mobile (27), ledit dispositif étant caractérisé en outre en ce que :

ledit moyen de contact avec une feuille comporte un support allongé (30), une pluralité de bras (31) qui s'étendent depuis ledit support, une pluralité de ventouses (32) montées chacune sur un bras différent parmi lesdits bras pour venir en contact avec lesdites feuilles en des points espacés prédéterminés, un distributeur (47) monté sur ledit support, un premier tube (35) branché entre ledit distributeur et lesdites ventouses ;

un moyen de fourniture de force d'aspiration (76) ;

une vanne (61) ;

des seconds tubes (69, 73) reliant ledit moyen de fourniture de force d'aspiration audit distributeur par l'intermédiaire de ladite vanne ;

ladite partie formant embase comprenant un moyen formant plate-forme (88) sur lequel est monté ledit pivot (81) pour monter l'autre extrémité de ladite poutre mobile sur ledit moyen formant plate-forme de sorte que ladite poutre peut pivoter sur une trajectoire telle que ledit moyen de contact avec une feuille peut être positionné au-dessus de ladite pile de feuilles et de ladite palette de boîtes métalliques dans des positions de pivotement maximum opposées de ladite poutre mobile ;

ladite partie formant embase comprenant un moyen formant support (99) sur lequel est monté de manière mobile ledit moyen formant plate-forme de sorte que ledit moyen formant plate-forme est mobile dans des sens opposés sur une trajectoire dirigée vers ladite pile de feuilles et ladite palette de boîtes métalliques et s'écartant de celles-ci ;

ledit moyen de commande comprenant des moyens formant came (111, 115, 116) comportant une contre-came (111) montée sur ladite poutre mobile et des guides de came (115, 116) montés sur ledit moyen formant support pour venir en contact avec ladite contre-came pendant au moins une partie dudit mouvement de pivotement de ladite poutre mobile, lesdits guides de came présentant un contour tel que lorsque ladite contre-came est en contact avec lesdits guides de came ledit moyen formant plate-forme est déplacé par suite du pivotement de ladite poutre mobile pour commander ainsi la longueur efficace de ladite poutre mobile et pour provoquer ainsi un mouvement prédéterminé de ladite feuille depuis ladite pile de feuilles en direction de ladite palette de boîtes métalliques ;

des moyens de déplacement (105, 106) reliés audit moyen formant plate-forme pour provoquer un mouvement dudit pivot dans une position centrale prédéterminée lorsque ladite contre-came n'est pas en contact avec lesdits guides de came ; et

un moyen d'entraînement (28) pour provoquer un pivotement de ladite poutre mobile pour transférer ainsi ladite feuille de ladite pile de feuilles à ladite palette de boîtes métalliques.

13. Procédé pour transférer une feuille d'une première position prédéterminée dans une seconde position prédéterminée à l'aide d'un moyen de transfert, ledit procédé comprenant les étapes consistant à saisir une feuille qui doit être transférée de ladite première position prédéterminée dans ladite seconde position prédéterminée par le mouvement d'un bras relié à pivotement à une embase par un pivot mobile, ledit moyen de transfert faisant pivoter ledit bras autour dudit pivot mobile pour provoquer le mouvement de ladite feuille sensiblement linéairement dans une direction sensiblement verticale vers le haut depuis ladite première position prédéterminée sur une distance sensible, le pivotement dudit bras autour dudit pivot mobile pour déplacer ladite feuille suivant un arc orienté sensiblement verticalement après l'achèvement dudit mouvement ascendant jusqu'à un point situé au-dessus de ladite seconde position prédéterminée, le pivotement dudit bras autour dudit pivot mobile pour provoquer un mouvement de ladite feuille sensiblement linéairement dans une direction sensiblement verticale vers le bas sur une distance sensible après que ladite feuille a été déplacée sur ledit arc, pour déposer ladite feuille dans ladite seconde position prédéterminée, et le relâchement de ladite feuille après qu'elle a été déposée dans ladite seconde position prédéterminée, ledit procédé étant caractérisé en ce que ledit bras présente une longueur efficace variable pendant lesdites étapes de pivotement, et ladite liaison pivotable encre ledit bras et ladite embase est sensiblement immobile dans une direction verticale pendant lesdites étapes de pivotement.

14. Procédé selon la revendication 13, comprenant la saisie de ladite feuille au moyen d'une pluralité de ventouses et l'application d'une force d'aspiration auxdites ventouses, et dans lequel ledit relâchement de ladite feuille comprend l'interruption de ladite force d'aspiration et l'application d'une pression d'air auxdites ventouses.

15. Procédé selon la revendication 14, dans lequel lesdites ventouses sont montées à l'extrémité de parties de tubes montés sur l'autre extrémité dudit bras, chacune desdites ventouses ayant une extrémité ouverte et lesdites extrémités ouvertes étant maintenues dans une orientation sensiblement constante pendant les mouvements de pivotement de ladite autre extrémité dudit bras, et ledit pivot étant déplaçable pour amener ledit bras à déplacer lesdites feuilles dans lesdites directions sensiblement verticales.

16. Procédé selon la revendication 15, dans lequel ledit pivot est déplacé grâce à des moyens formant came, et dans lequel ledit pivot est déplacé dans une position centrale prédéterminée lorsqu'il n'est pas déplacé par lesdits moyens formant came.

17. Procédé selon la revendication 13, comprenant la répétition automatique de chacune desdites étapes en combinaison avec le dépôt d'une couche de boîtes métalliques sur ladite palette de boîtes métalliques de sorte que ladite palette est remplie automatiquement de couches verticales de boîtes métalliques verticales, une feuille étant disposée entre lesdites couches verticales.

**Patentansprüche**

1. Blattübergabevorrichtung zur Übergabe eines Blattes aus einer ersten vorherbestimmten Stelle (24) an eine zweite vorherbestimmte Stelle (16), die im Abstand von der ersten vorherbestimmten Stelle angeordnet ist, wobei die Vorrichtung zum Angriff an dem Blatt dienende Mittel (26) besitzt, die mit einem beweglichen Balken (27) verbunden sind, der zum Angriff an einem an der ersten vorherbestimmten Stelle befindlichen Blatt und zum darauffolgenden, eine Freigabe des Blattes ermöglichenden Halten des Blattes in Anlage an den zum Angriff an dem Blatt dienenden Mitteln dient, wobei die Vorrichtung Übergabemittel aufweist, die einen Basisteil (88) besitzen, der bewegbare Schwenkachsenmittel (81) besitzt, auf denen der bewegbare Balken an einer im Abstand von den zum Angriff an dem Blatt dienenden Mitteln angeordneten Stelle schwenkbar gelagert ist, wobei der bewegbare Balken derart mit den zum Angriff an dem Blatt dienenden Mitteln verbunden ist, daß die zum Angriff an dem Blatt dienenden Mittel von der ersten vorherbestimmten Stelle zu der zweiten vorherbestimmten Stelle bewegt werden, und es ermöglicht, daß diese Bewegung während eines ersten Teils der genannten Bewegung eine in einer im wesentlichen vertikalen Richtung über eine beträchtliche Strecke von der ersten vorherbestimmten Stelle wegführende, im wesentlichen lineare Bewegung der genannten Verbindung zwischen dem bewegbaren Balken und den zum Angriff an dem Blatt dienenden Mitteln umfaßt, wobei die Bewegung der genannten Verbindung zwischen dem bewegbaren Balken und dem zum Angriff an dem Blatt dienenden Mitteln während eines zweiten Teils der genannten Bewegung eine horizontale Komponente hat und die genannte Bewegung während eines dritten Teils der genannten Bewegung eine über eine beträchtliche Strecke zu der zweiten vorherbestimmten Stelle hinführende, im wesentlichen lineare Bewegung umfaßt, wobei während der genannten Bewegung der zum Angriff an dem Blatt dienenden Mittel von der ersten vorherbestimmten Stelle zu der zweiten vorherbestimmten Stelle der bewegbare Balken der Übergabemittel sich in einer im wesentlichen vertikalen Ebene bewegt und die Vorrichtung Freigabemittel (61) besitzt, die dazu dienen, daß das Blatt zum Abrücken von den zum Angriff an dem Blatt dienenden Mitteln freigegeben wird, wenn das Blatt von den zum Angriff an dem Blatt dienenden Mitteln an die zweite vorherbestimmte Stelle bewegt worden ist, wobei die Vorrichtung dadurch gekennzeichnet ist, daß die Übergabemittel Steuermittel (111, 115, 116) aufweisen, die zum Bestimmen der wirksamen Länge des bewegbaren Balkens mit diesem zusammenwirken, wobei die bewegbaren Schwenkachsenmittel in einer vertikalen Richtung im wesentlichen unbeweglich sind.

2.   Vorrichtung nach Anspruch 1, dadurch gekennzeichnet, daß die zum Angriff an dem Blatt dienenden Mittel einen langgestreckten Träger (30) aufweisen, ferner eine Mehrzahl von Armen (31), die sich von dem Träger weg erstrecken und in einer im wesentlichen vertikalen Bahn schwenkbar gelagert sind, so daß die Arme beim Auftreffen auf einem Hindernis leicht auslenkbar sind, und eine Mehrzahl von zum Angriff an dem Blatt dienenden Gliedern (32), die mit den Armen verbunden sind und dazu dienen, an dem Blatt an einer Mehrzahl von im Abstand voneinander angeordneten Stellen anzugreifen.

3.   Vorrichtung nach Anspruch 2, dadurch gekennzeichnet, daß die Übergabemittel Mittel (80, 82, 84) zum Halten des langgestreckten Trägers in einer im wesentlichen horizontalen Stellung unabhängig von der Orientierung des bewegbaren Balkens der Übergabemittel aufweisen.

4.   Vorrichtung nach Anspruch 2, dadurch gekennzeichnet, daß die zum Angriff an dem Blatt dienenden Glieder Saugkraftausübungsmittel (32) aufweisen und die Vorrichtung Saugkraftübertragungsmittel (76) aufweist, die Absperrmittel (61) und Verteilmittel (47) zum Übertragen einer Saugkraft über die Absperrmittel auf die Saugkraftausübungsmittel aufweisen und die Absperrmittel eine Beaufschlagung der Saugkraftausübungsmittel mit der Saugkraft bewirken, wenn die Saugkraftausübungsmittel mit dem an der ersten vorherbestimmten Stelle befindlichen Blatt in Berührung stehen, und die Absperrmittel eine Freigabe des Blattes zum Abrücken von den zum Angriff an dem Blatt dienenden Mitteln bewirken, wenn das Blatt von den zum Angriff an dem Blatt dienenden Mitteln an die zweite vorherbestimmte Stelle bewegt worden ist.

5.   Vorrichtung nach Anspruch 1, dadurch gekennzeichnet, daß jedes der Saugkraftausübungsmittel einen Anlegebereich (42) besitzt und jedes der Saugkraftausübungsmittel derart auf den Armen montiert ist, daß es während der ganzen genannten Bewegung der Übergabemittel den Anlegebereich in einer im wesentlichen konstanten Richtungsorientierung hält.

6.   Vorrichtung nach Anspruch 4, dadurch gekennzeichnet, daß die Saugkraftausübungsmittel Saugnäpfe sind.

7.   Vorrichtung nach Anspruch 1, dadurch gekennzeichnet, daß der Basisteil auf Tragmitteln (99) derart gelagert ist, daß der Basisteil auf einer Bahn in einander entgegengesetzten Richtungen zu der ersten und der zweiten vorherbestimmten Stelle hin und von ihnen weg bewegbar ist.

8. Vorrichtung nach Anspruch 7, dadurch gekennzeichnet, daß die Steuermittel Kurvensteuermittel (111) aufweisen, die mit dem bewegbaren Balken verbunden sind und dazu dienen, durch eine Verschiebung der Schwenkachsenmittel die wirksame Länge des bewegbaren Balkens zu bestimmen.

9. Vorrichtung nach Anspruch 8, dadurch gekennzeichnet, daß die Steuermittel Vorbelastungsmittel (105, 106) aufweisen, die dazu dienen, die Schwenkachsenmittel zu einer vorherbestimmten zentralen Stellung hin zu bewegen, wenn sie nicht von den Kurvensteuermitteln verschoben sind.

10. Vorrichtung nach Anspruch 1, dadurch gekennzeichnet, daß die Vorrichtung Mittel (99, 104) aufweist, auf denen der Basisteil der Übergabemittel derart montiert ist, daß der bewegbare Balken in einer vorherbestimmten Ebene verschwenkbar ist.

11. Vorrichtung nach Anspruch 1, dadurch gekennzeichnet, daß das Blatt an der ersten vorherbestimmten Stelle dem oberen Ende eines Stapels von Blättern (24) benachbart ist und an der zweiten vorherbestimmten Stelle der Oberseite einer Dosenpalette (15) benachbart ist, daß die zum Angriff an dem Blatt dienenden Mittel an dem obersten Blatt des Blätterstapels als dem zu übergebenden Blatt angreifen und daß die Übergabemittel das oberste Blatt von dem Blätterstapel zu dem oberen Ende von Dosen auf der Dosenpalette bewegen.

12. Blattübergabevorrichtung nach Anspruch 1, dadurch gekennzeichnet, daß sich die erste vorherbestimmte Stelle an einem Blätterstapel (24) befindet, daß die zweite vorherbestimmte Stelle sich an den oberen Enden einer Lage von Dosen (16) auf einer Dosenpalette (15) befindet und daß die zum Angriff an dem Blatt dienenden Mittel (26) mit einem Endteil des bewegbaren Balkens (27) verbunden sind wobei die Vorrichtung ferner dadurch gekennzeichnet ist, daß

die zum Angriff an dem Blatt dienenden Mittel einen langgestreckten Träger (30) aufweisen, von dem sich eine Mehrzahl von Armen (31) weg erstreckt, ferner eine Mehrzahl von Saugnäpfen (32), die jeweils auf verschiedenen der Arme montiert sind, um die Blätter an vorherbestimmten, im Abstand voneinander angeordneten Punkten zu berühren, ferner einen auf dem Träger montierten Verteiler (47) und erste Rohrmittel (35) die zwischen dem Verteiler und den Saugnäpfen geschaltet sind; ferner

Saugkraftübertragungsmittel (76);

Absperrmittel (61);

zweite Rohrmittel (69, 73), die die Saugkraftübertragungsmittel über die Absperrmittel mit den Verteilermitteln verbinden;

wobei der Basisteil Plattformmittel (88) aufweist, die zur Lagerung des anderen Endes des bewegbaren Balkens auf den Plattformmitteln mit den Schwenkachsenmitteln (81) versehen sind, so daß der Balken in einer Bahn derart verschwenkbar ist, daß sich die zum Angriff an dem Blatt dienenden Mittel über dem Blätterstapel bzw. über der Dosenpalette befinden, wenn der bewegbare Balken einander entgegengesetzte Grenzstellungen seiner Verschwenkung einnimmt;

wobei der Basisteil Tragmittel (99) besitzt, auf denen die Plattformmittel derart gelagert sind, daß die Plattformmittel auf einer Bahn in einander entgegengesetzten Richtungen zu dem Blätterstapel und der Dosenpalette hin bzw. von ihnen weg bewegbar sind;

wobei die Steuermittel Kurvensteuermittel (111, 115, 116) mit einem auf dem bewegbaren Balken montierten Kurvenabtaster (111) und Kurvenführungen (115, 116) aufweisen, die auf den Tragmitteln montiert sind und wenigstens während eines Teils der Verschwenkung des bewegbaren Balkens an dem Kurvenabtaster angreifen und eine solche Kontur haben, daß bei an den Kurvenführungen angreifendem Kurvenabtaster ein Verschwenken des bewegbaren Balkens eine derartige Verschiebung der Plattformmittel bewirkt, daß dadurch die wirksame Länge des bewegbaren Balkens verändert und infolgedessen eine vorherbestimmte Bewegung des Blattes von dem Blätterstapel weg und zu der Dosenpalette hin bewirkt wird; ferner

Vorbelastungsmittel (105, 106), die mit den Plattformmitteln derart verbunden sind, daß bei von den Kurvenführungen abgerücktem Kurvenabtaster die Schwenkachsenmittel in einer vorherbestimmte zentrale Stellung bewegt werden; und

Antriebsmittel (28) zum Verschwenken des bewegbaren Balkens derart, daß das Blatt von dem Blätterstapel auf die Dosenpalette übergeben wird.

13. Verfahren zur Übergabe eines Blattes von einer ersten vorherbestimmten Stelle an eine zweite vorherbestimmte Stelle unter Verwendung von Übergabemitteln, wobei das Verfahren folgende Schritte umfaßt: zum Erfassen eines von der ersten vorherbestimmten Stelle an die zweite vorherbestimmte Stelle zu übergebenden Blattes wird ein Arm bewegt, der durch bewegbare Schwenkachsenmittel mit einer Basis verbunden ist, durch ein von den Übergabemitteln bewirktes Verschwenken des Armes um die bewegbaren Schwenkachsenmittel wird das Blatt von der ersten vorherbestimmten Stelle über eine beträchtliche Strecke in einer vertikalen Richtung aufwärtsbewegt; durch Verschwenken des Armes um die bewegbaren Schwenkachsenmittel nach der vollständigen Durchführung der genannten Aufwärtsbewegung wird das Blatt längs eines im wesentlichen vertikal orientierten Bogens an eine Stelle über der zweiten vorherbestimmten Stelle bewegt, durch Verschwenken des Arms um die bewegbaren Schwenkachsenmittel wird das Blatt nach seiner Bewegung längs des Bogens in einer im wesentlichen vertikalen Richtung über eine beträchtliche Strecke abwärtsbewegt, um das Blatt an der zweiten vorherbestimmten Stelle abzulegen, und das an der zweiten vorherbestimmten Stelle abgelegte Blatt wird freigegeben, wobei das Verfahren dadurch gekennzeichnet ist, daß

der Arm während der genannten Verschwenkschritte eine veränderbare wirksame Länge hat und die Schwenklagerung zwischen dem Arm und der Basis während der genannten Verschwenkungsschritte im wesentlichen unbeweglich ist.

14. Verfahren nach Anspruch 13, dadurch gekennzeichnet, daß zum Erfassen des Blattes eine Mehrzahl von Saugnäpfen verwendet und in den Saugnäpfen eine Saugkraft ausgeübt wird und daß zur Freigabe des Blattes die Saugkraft weggenommen und über die Näpfe eine Beaufschlagung mit Druckluft bewirkt wird.

15. Verfahren nach Anspruch 14, dadurch gekennzeichnet, daß die Saugnäpfe am Ende von Teilen von am anderen Ende des Arm montierten Rohren montiert sind, daß jeder der Näpfe ein offenes Ende hat und während der Schwenkbewegungen des anderen Endes des Arms die offenen Enden in einer im wesentlichen gleichbleibenden Richtungsorientierung gehalten werden, und daß die Schwenkachsenmittel derart verschiebbar sind, daß der Arm die Blätter in der im wesentlichen vertikalen Richtung bewegt.

16. Verfahren nach Anspruch 15, dadurch gekennzeichnet, daß die Schwenkachsenmittel zu einer vorherbestimmten zentralen Stellung hin vorbelastet sind, wenn sie nicht durch die Kurvensteuermittel verschoben sind.

17. Vorrichtung nach Anspruch 13, dadurch gekennzeichnet, daß in dem Verfahren auf Grund des Ablegens einer Lage von Dosen auf der Palette jeder der genannten Schritte automatisch wiederholt wird, so daß die Palette automatisch mit horizontalen Lagen von aufrechtstehenden Dosen gefüllt wird und zwischen den horizontalen Lagen jeweils ein Blatt angeordnet wird.

Fig_IOA

Fig_IOB

Fig_I

Fig_2

Fig_3

Fig_4

Fig_5

Fig_6

Fig_7

Fig_8

Fig_9

Fig_12

Fig_14

Fig_11

Fig_13